(19) Europäisches Patentamt
European Patent Office
Office européen des brevets

(11) **EP 3 672 120 A1**

(12) **EUROPEAN PATENT APPLICATION**

(43) Date of publication:
24.06.2020 Bulletin 2020/26

(51) Int Cl.:
*H04J 14/00* (2006.01)

(21) Application number: 18213364.5

(22) Date of filing: 18.12.2018

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ETH Zurich**
**8092 Zurich (CH)**

(72) Inventors:
• **NOVOTNY, Lukas**
**8708 Männedorf (CH)**
• **DIVITT, Shawn**
**Gaithersburg, MD Maryland 20878 (US)**

(54) **METHOD AND DEVICE FOR MULTIPLEXING INFORMATION**

(57) The present invention relates to methods and systems in the field of data transmission, in particular in the field of encoding methods and multiplexing, in particular coherence multiplexing.

A method for encoding information according to the invention comprises the step (S0) of providing information to be transmitted and the step (S1.2) of creating a plurality of random variables, wherein the random variables have correlation coefficients that represent the information to be transmitted.

The invention concerns further a related method for decoding information, a related method for transmitting information and devices and systems equipped to carry out any of said methods.

Fig. 1

Fig. 2

Fig. 3

EP 3 672 120 A1

**Description**

The present invention relates to methods and systems in the field of data transmission, in particular in the field of encoding methods and multiplexing, in particular coherence multiplexing.

There is an ever increasing demand for higher transmission capacity in data transmission technology. However, state-of-the-art communication infrastructure is reaching their physical limits in terms of transmission capacity.

High investment costs are needed to modernize communication infrastructure to meet the demands for higher transmission capacity. In particular, communication infrastructure of relatively short-range networks needs to be modernized on a regular basis. Otherwise, a supplier for data transmission services cannot meet their clients' increased demands. However, the data transmission business is a very competitive and hence cost-sensitive business which means that the costs per user are very critical, wherein hardware costs, such as the replacement of transmission infrastructure, are important cost driver.

For example, single mode fiber optic communication is approaching the Shannon limit. This means that the transmission capacity cannot be increased further by improving existing transmission techniques. The only work-around provided by state-of-the-art technology is based on spatial multiplexing in the form of multi-mode fiber, multi-core fiber and fiber bundling. However, such work-arounds need replacement of key elements of installed infrastructure and result in high investment costs. Further, work-arounds of this manner provide transmission capacity that scales linearly with the number of fibers. However, the demand for transmission capacity increases rather exponentially in time than linearly.

Due to these reasons, there is need for alternative approaches to increase transmission capacity of existing and future communication infrastructure.

Another disadvantage of many state-of-the-art data transmission methods is the ability of not authorized individuals to record and decode information sent from a transmitter to a receiver. High investments are needed in developing more sophisticated coding methods, installing such coding methods and maintain such coding methods and related equipment.

Hence, there is not only need for alternative approaches to increase transmission capacity but also to increase transmission capacity in a manner that considers security requirements.

The present invention meets the demands on transmission capacity increase and security by providing a coding method in which information is encoded into the correlation coefficient between random variables. In other words, the method provided is a coherence multiplexing method which is from a conceptual point of view completely different from the multiplexing methods widely known such as Wavelength (or Frequency) Division Multiplexing (WDM) or Time Division Multiplexing (TDM).

State-of-the-art coherence multiplexing methods are disclosed in, for example:

- J. Brooks, R. Wentworth, R Youngquist, M. Tur, B. Kim, and H Shaw, "Coherence multiplexing of fiber-optic interferometric sensors," J. Lightwave Technol. 3, 062-1072 (1985).

- J.P. Goedgebuer, H Porte, and A. Hamel, "Electrooptic modulation of multilongitudinal mode laser diodes: Demonstration at 850nm with simultaneous data transmission by coherence multiplexing," IEEE J. Quantum Electron. 23, 1135-1144 (1987).

- R.A. Griffin, D.D. Sampson, and D.A. Jackson, "Coherence coding for photonic code-division multiple access networks," J. Lightwave Technol. 13, 1826-1837 (1995).

- A. Meijerink "Coherence multiplexing for optical communication systems," Ph.D. thesis, University of Twente (2005).

The coherence multiplexing methods disclosed therein use temporal coherence. That is, correlations between the variables in the same space at two different times are used to encode information.

Further, the coherence multiplexing methods disclosed comprise a dedicated reference signal. This means that each signal is encoded with respect to its own, single reference. Hence, there is need to transmit a reference signal for each signal comprising information to be transmitted. This is disadvantageous in terms of transmission capacity and security, at least. In addition, it is the phase and/or amplitude of the signal and reference signal that are modulated while the degree of coherence between signal and reference signal is not modulated. This makes sense regarding the basic concept of the coherence multiplexing methods disclosed as coherence is the mechanism through which each signal and its reference signal mutually interfere and can be separated from other signals in the disclosed methods. Hence, it makes no sense to affect the coherence between the signal and reference signal.

It is an object of the present invention to provide methods and devices in the field of data transmission that overcome disadvantages of state-of-the-art methods and state-of-the-art devices.

According to a first aspect, it is an object of the present invention to provide a method and a related device for encoding information.

It is a further aspect of the present invention to provide a method and a related device for decoding information, in particular for decoding information that has been encoded by the method/device according to the first aspect.

According to a second aspect, it is an object of the present invention to provide an alternative multiplexing method and a system configured to perform said alternative method.

In particular, it is an object of the present invention to provide a multiplexing method and a related system which utilize transmission channels in an improved manner, in particular with respect to transmission capacity.

It is a further object of the present invention to provide a multiplexing method and a related system that is capable of increasing the transmission capacity of installed transmission infrastructure.

It is a yet a further object of the present invention to provide a multiplexing method and a related system that is capable of establishing a high security level in terms of eavesdropping.

At least one of these objects is achieved by the subjects of the independent claims. Particularly favorable as well as further exemplary embodiments are further defined by the subject of the dependent claims as well as the overall disclosure of the present document.

It is an insight of the invention that information can be encoded into a statistical correlation coefficient between random variables.

In the following, the illustrative example of pairwise correlations is used to explain the invention and some of its advantages. However, the invention can be carried out without deviating from the inventive idea using the correlation between a multitude of random variables. This leads, for example, to matrixes of higher ranks.

In the case of encoding information into the statistical correlation coefficients between two random variables makes a number $N$ of transmission links to appear as $N(N-1)/2$ links and a number $N$ of communication channels to appear as $N(N-1)/2$ communication channels, respectively.

In other words: Encoding according to the invention effects that a communication system providing $N$ carrier signals for data transmission provides $N(N-1)/2$ transmission channels. This means that $N(N-1)/2$ bits can be transmitted at the same time through $N$ carrier signals, for example.

Further, encoding according to the invention has the potential to improve the transmission capacity of a single communication channel. As will be shown below in detail, information to be transmitted can be encoded in realizations of a vector of random variables for example, wherein the vector of random variables has a correlation matrix that is related to or corresponds to a so-called data matrix that represents the information to be transmitted. For the simple case of pairwise correlation and one communication channel and assuming that a data string of length $m$ has to be transmitted and that $p$ realizations of the vector of random variables need to be transmitted to reproduce the data matrix reliably, the data string can be transmitted more efficiently as soon as $2p+1 < m$.

An embodiment according to the simple case of pairwise correlations using one communication channel may be a realization of the invention that is not favorable in terms of increasing information capacity.

The following definitions are used in this text:

- The term "transmission link" is used for any physical carrier capable to support at least one carrier signal. For example, the carrier can be a physical transmission medium, such as a wire, a fiber or their wireless equivalences capable to support electromagnetic signals in the MHz and GHz frequency range or in the visible to near-infrared wavelength range, for example.
  The term "carrier signal" is used for any propagating signal capable to be modulated by an input signal.
  The term "communication channel" is used for a channel capable to transmit one modulated carrier signal.
  The term "communication channel" is quite abstract as it can be a mode in a multi- or single-mode transmission link, for example. In the latter case, the transmission link can be seen as equal to the communication channel. In the first case, the transmission link comprises a multitude of communication channels.
  Due to these definitions of "carrier signal" and "communication channel", these two features are interchangeable in most cases.
  The term "transmission channel" is used for the ability of a transmission link or a multitude of transmission links to transmit a basic unit of information in a manner that it can be reproduced after transmission.
  In many cases, the basic unit of information is a bit, commonly represented as 0 or 1.
  Using these meanings of "transmission link" and "transmission channel", it is possible to consider the fact that the number of transmission channels of a transmission link or a multitude of transmission links depends on the number of carrier signals (communication channels) supported by the transmission link(s) and the encoding method used.
  For example, a single transmission link supporting one carrier signal only may have no transmission channel, this means not the ability to transmit a basic unit of information in a reproducible manner, if the encoding method used encodes information in a spatial (but not temporal) relative characteristic of the carrier signal because it is not capable to transmit a reference signal needed to reproduce the basic unit of information modulated on the single carrier signal.
  For example, a single transmission link supporting a multitude of carrier signals (communication channels), for example a multimode fiber, has a number of transmission channels that depends on the encoding method, for example the use of reference signals.

- A vector of random variables is a vector having random variables as entries. Hence, the vector of random variables has a manifold, in fact an infinite number, of realizations.

  A vector of random variables generated by statistical coloring transformation is meant by the term "vector of random variables" in many embodiments.

  However, one can envisage to generate the vector of random variables differently, for example by using statistical whitening transformation.

  The entries of the vector of random variables can be complex number.

- A statistical correlation matrix $K$ (in short "correlation matrix") generated from a column vector of $n$ random variables, $Y = [Y_1,...,Y_n]^T$, is given by

$$K_{ij} := \frac{\langle Y_i Y_j^* \rangle}{\sqrt{\langle Y_i^* Y_i \rangle \langle Y_j^* Y_j \rangle}}, \ i,j \in \{1,...,n\}.$$

Therein, the angle brackets represent the mean average and * represents the complex conjugate.

In other words, the elements of the statistical correlation matrix K correspond to correlation coefficients, which are normalized covariances.

- The terms "matrix" and "vector" are used as conceptual constructs, only. It goes without saying that there is no need to generate a matrix or vector in the sense of a specific arrangement of values in any embodiment. Rather, data or states are generated if needed, said data or states represent entries of the matrix or vector.

A first aspect of the invention concerns a method for encoding information. The method comprises the steps of:

- Providing information to be transmitted.

  For example, the information to be transmitted can be received, generated, inputted by a user etc.

  The information to be transmitted can be received via an incoming data channel, for example.

  The information to be transmitted can be retrieved.

  The information to be transmitted can be provided in a specific code, for example binary code In particular, the information to be transmitted can be received in or transformed to the specific code.

  In particular, the specific code can allow representation of the information in a manner that is favorable for the generation of a data matrix.

- Creating a plurality of random variables, wherein the random variables have correlation coefficients that represent the information to be transmitted.

  The plurality of random variables can be created as described below in detail. However, there is no need that the random variables are determined, recorded or the like. Further, there is no need that the random variables are created as vector of random variables.

  The random variables can be created by a processor or a random physical process. In both cases, the random variables can be created by statistical coloring transformation (as described below) or statistical whitening transformation.

In an embodiment, the method for encoding information comprises the further step of generating a plurality of output signals, wherein each output signal comprises a characteristic value and wherein the characteristic values of the output signals are related by a bijective function to the random variables.

The method can comprise at least one further output signal that is different from the output signals of the plurality of output signals used for encoding information. This at least one further output signals does not need to comprise the characteristic value and/or its characteristic value is not part of the characteristic values that are related by a bijective function to the random variables.

In an embodiment, the method comprises a step of determining a data matrix from information to be transmitted and the step of creating the plurality of random variables comprises a substep of creating a vector of random variables. The vector of random variables has a correlation matrix that is related to the data matrix.

The vector of random variables can be created by statistical coloring or whitening transformation.

The correlation matrix used in the creation of the vector of random variables that has a correlation matrix that is related to the data matrix also includes correlation matrices that are generated from the data matrix. In particular, the correlation matrix is related to the data matrix in a univocal manner.

In an embodiment, the data matrix is the correlation matrix of the created vector of random variables.

In particular, the correlation matrix or the data matrix - as the case may be - can be a valid correlation matrix. This means that the correlation matrix or the data matrix - as the case may be - can be positive semidefinite.

In an embodiment, the correlation matrix or the data matrix - as the case may be - is Hermitian and positive semidefinite, and has ones along the main diagonal and off-diagonal elements of magnitude (absolute value) less than or equal to 1.

The vector of random variables can be created from the data matrix that is a valid correlation matrix by use of statistical coloring transformation, for example.

In an embodiment, the information to be transmitted is represented by the off-diagonal elements (entries) of the data matrix.

For example, a unique ordinal number is attributed to each off-diagonal element that represents a portion of the information to be transmitted, wherein a data string of the information to be transmitted is reproduced by attributing the first element of the data string to the off-diagonal element with the lowest ordinal number, the second element of the data string to the off-diagonal element with the second lowest ordinal number and so on.

The information to be transmitted is given with respect to a specific code. In many applications, the specific code is binary code. However, the method according to the invention is not limited to binary code.

The specific code comprises a plurality (this means at least two) basic elements. A unique number is attributed to each basic element of the specific code.

The unique number of each basic element can be within a range of numbers delimited by the positive semidefinite constraint.

The unique number can be a preset value. The preset value can depend on the size of the data matrix and/or the number of carrier signals (communication channels) available.

The unique number can depend on a value optimized with respect to the data matrix.

In an embodiment, for example in the embodiment in which the information to be transmitted is represented by the off-diagonal elements (entries) of the data matrix, the method comprises the step of determining a maximum value, in particular a maximum magnitude, for the unique number. In other words, the method can comprise the step of determining a maximum value, in particular a maximum magnitude, for the off-diagonal elements.

In particular, the maximum value is determined under the positive semidefinite constraint.

At least one of the unique numbers, and hence of the off-diagonal elements, can be a complex number.

The unique numbers can be distinguished in their magnitude and/or their phase.

For example, the basic elements of the binary code are 0 and 1. In this case, a preset value can be attributed to 1 and the negative of the preset value can be attributed to 0.

For example, the preset value can be equal to *1/(n-1)*, wherein *n* is the dimension of the data matrix in the case of pairwise correlations. This means, the data matrix is a *(n,n)*-matrix.

However, one can also envisage to attribute a given phase to 1 and another given phase to 0.

In an embodiment, the method comprises:

- The (sub)step of creating a vector of random variables that has a correlation matrix that is related to the data matrix;

- The step of generating a plurality of output signals, wherein each output signal comprises a characteristic value and wherein the characteristic values of the output signals are related by a bijective function to the random variables, wherein the plurality of output signals are generated in a multitude of sets of output signals and wherein:

  ◦ Each output signal of a set of output signals comprises a characteristic value.
  The characteristic value can determine a characteristic of the output signal, such as its amplitude and/or phase, for example.
  ◦ The characteristic values of the output signals of a set of output signals are related by the bijective function to the entries of a realization of the vector of random variables, wherein each set of output signals is related to one realization of the vector of random variable and vice versa, only.
  In particular, the vector of random variables can have a length that corresponds to the number of output signals in a set of output signals. This means that the vector of random variables can have a dimension *n* if there are *n* output signals per set of output signals.
  In particular, the output signals of a set of output signals can be enumerated and there can be a one-to-one relation between the number of an output signal and a position in the vector of random variables, wherein the characteristic value attributed to the output signal with said number can be related to the entry in the vector at said position.

In an embodiment, the output signals of a set of output signals are the entries of a realization of the vector of random variables.

In an embodiment, the output signals are signals that can be transmitted by a transmission link. For example, the output signals can be a modulated carrier signal with a characteristic that is determined by a characteristic value, wherein the characteristic value is set as described above.

In an embodiment, the output signals comprise information from which a modulation of at least one carrier signal can be derived. For example, the output signals can comprise the characteristic values determined as described above or a control signal configured to modulate a characteristic of at least one carrier signal.

In an embodiment, the output signals distinguish from each other in the characteristic set by the random variables. Hence - and in contradiction to state-of-the-art encoding methods - the output signals are mutually referenced, but not referenced with respect to a dedicated reference signal.

This means also that there is no need to generate and/or transmit a reference signal. It is noted in this context that a reference signal is not modulated with an information signal. In other words, a reference signal does not comprise any characteristic that comprises information on the information to be transmitted.

Further, there is no need to reference individually an output signal to a reference signal.

In this embodiment too, the output signals can be output signals of a set of output signals, said output signals distinguishing from each other in the characteristic set by the entries of a realization of the vector of random variables.

In an embodiment, a correlation coefficient between at least two output signals is modulated or a correlation coefficient between two signals that are modulated by use of the at least two output signals is modulated.

For example, the at least two output signals are generated from two mutually perfectly correlated signals that are uncorrelated or from two mutually uncorrelated signals that are mutually partially correlated.

In particular, the correlation coefficient is modulated by modulating the characteristic that depends on the characteristic value.

Again, the at least two output signals can be output signals of a set of output signals.

Dependent on the concrete realization of the method, the number of degrees of coherence between output signals (of a set of output signals as the case may be) that is modulated can depend on the random variables (of the vector of random variables as the case may be). Consequently, the amount of degrees of coherence that are modulated can depend on the information to be transmitted, the data matrix generated from said information, and the method used to create the random variables, for example the statistical coloring transformation (as described below) used to generate the (vector of) random variables, for example.

In particular, the correlation between the at least two output signals at the same time or the correlation between at least two signals that are modulated by the use of the at least two output signals is used to encode the information to be transmitted. In contrast to this, state-of-the-art coherence multiplexing methods involve temporal coherence. That is, correlations between the output signals in the same space at two different times are used to encode information.

In an embodiment, the data matrix is a valid correlation matrix and the correlation matrix of the vector of random variables attributed to the multitude of sets of output signals is identical to the data matrix.

A vector of random variables that has a correlation matrix that corresponds to a given correlation matrix can be found by statistical coloring transformation as given in D.G. Manolakis, R.B. Lockwood, and T.W. Cooley, Hyperspectral Imaging Remote Sensing: Physics, Sensors, and Algorithms (Cambridge University Press, 2016) on pages 370-371 and in L. Devroye, Non-Uniform Random Variate Generation (Springer New York, 1986) on pages 564-566, for example. The named publications, in particular the named pages, are incorporated by reference herewith.

In an embodiment, the data matrix is generated in a manner that an upper bound on the magnitude of the off-diagonal elements is maximized.

This allows for an improved probability of successful recovery of the data matrix in a decoder.

In an embodiment, the method comprises the further step of providing at least one offset and of applying the offset to an output signal such that the characteristic of the offset output signal has changed with respect to another output signal, in particular to the related characteristic of the other output signal.

In an embodiment, a plurality of offsets is provided and the offsets are applied to the output signals, in particular to the output signals of a set of output signals.

In particular, the offsets are such that the correlation coefficients of the offset output signals do not correspond to the correlation coefficient of the random variables used to generate said output signals.

In an embodiment, the offsets are such that the offset output signals are mutually uncorrelated.

For example, the offsets can be phase offsets that correspond to a propagation length that is greater than the coherence length of the channel bandwidth of the communication channel.

The offsets, in particular the phase offsets, can change the correlation from purely spatial to spatiotemporal correlations, for example. In other words, the signals can still be correlated but in a different and hidden way, for example by being mutually equal-time uncorrelated.

In an embodiment, the offset is applied to an output signal of a set of output signals such that the characteristic of the offset output signal has changed with respect to another output signal of the set of output signals.

Embodiments comprising the step of providing at least one offset and of applying the offset to an output signals is advantageous in terms of security because it becomes much more difficult to reproduce the data without knowledge of the offsets applied.

In an embodiment, the offsets are changed periodically. This makes a determination of the offsets by an eavesdropper more difficult and increases the security of the method further.

The invention concerns further a method for decoding information, in particular decoding information that has been encoded by the method for encoding information according to an embodiments described.

The method for decoding information comprises the steps of:

- Receiving a plurality of signals.
  The signals received can be the output signals generated in embodiments of the method for encoding information or signals modulated by said output signals, for example.
- Sampling the signals, wherein a correlation between at least two signals and for a multitude of the plurality of signals is determined, for example measured.
  In other words, at least two correlations are determined. However, the number of correlations that is determined can consider at least one of the embodiment of the encoding method used, the number of correlations needed to reproduce the information to be transmitted and the number of communication channels used.
  "Determining a correlation between at least two signals" means that a value representing a degree of correlation is generated during setting the at least two signals in relation.
  The determined correlation can be represented by a value, such as an intensity, a measure for interference, a correlation value, a correlation coefficient, and the reproduced entry in a realization of the vector of random variables.
  In other words, an intensity, a measure for interference, a correlation value, a correlation coefficient, and the reproduced entry in a realization of the vector of random variables are examples of the value generated during correlation.
- Combining at least two of the determined correlations (or their representing values as the case may be).
  The step of combining is designed to contribute to an approximation of the information to be transmitted.
  In particular, the correlations (their representative values as the case may be) are averaged, summed or a statistical sample correlation matrix (in short "sample correlation matrix") is generated from the correlations, for example a sample correlation matrix as described below.

In an embodiment, the method for decoding information comprises the steps of:

- Receiving a multitude of sets of signals. An identifier can be attributed to each signal of a set of signals.
  In particular, the same set of identifiers is attributed to each set of signals. In many embodiments, this is the case as the identifier can be given by the communication channel through which the signal of the set of signals is received or by the position of the signal in a sequence of signals that comprises the set of signals, for example.
  In other words, the identifier can be given by the path taken by the signal of the set of signals, in particular by the communication channel and/or a path taken within the decoder, and/or by a chronological appearance of the signal with respect to other signals of the same set of signals. This means, the identifier does not need to be a character linked to the signal but can be given by the spatial and/or temporal course of the signal.
  In particular, the identifiers are such that each signal of a set of signals has a related signal in the other sets of signals, said related signal having the same identifier.
  In an embodiment, the signals are received through a plurality of communication channels. However, one can also envisage a method in which at least some of the signals are received via at least one communication channel in a temporal sequence.
  In particular, the multitude of sets of signals received are the multitude of sets of output signals generated in the method for encoding according to any embodiment disclosed or sets of signals modulated by said output signals.
  Each set of signals can comprise a plurality of signals, wherein the number of signals in the set of signals can be equal to the number of communication channels.
- Determining, in particular measuring, the correlation between at least two signals of a first set of signals and between at least two signals of a second set of signals, wherein the at least two signals of the first set of signals have the same identifiers as the at least two signals of the second set of signals.
  In particular, the degree of correlation between at least two signals is determined.
  Again, the number of correlations that is determined can consider at least one of the embodiment of the encoding method used, the number of correlations needed to reproduce the information to be transmitted and the number of communication channels used.
  In an embodiment, a correlation is determined, for example measured, between each signal of a set of signals and at least another signal of the same set of signals. In other words, the signals are sampled setwise and each signal is correlated to at least one other signal of the set of signals. It goes without saying that the term "each signal" means "each signal used to encode information according to the invention", in particular "each signal generated in any embodiment of the method for encoding or each signal derived therefrom", in particular the output signals generated or signals modulated by the output signals. Another signal received, such as a control signal or a reference signal in the sense of the state of the art, does not need to be correlated with at least another signal.

In the context of the step of sampling, correlating a signal with at least one other signal means that a correlation between the signal and the at least one other signal is determined. In other words, the signal is set in relation to the at least one other signal. In particular, a measurement is made that quantifies a degree of correlation between the signal and the at least one other signal.

In an embodiment, a correlation is determined between each signal and each other signal within a set of signals.

In particular, the sets of signals are received one by one and the signals of the same set are sampled and correlated.

In an embodiment, the signals are sampled pair- and setwise.

- Combining the correlation (its representing value as the case may be) determined between the at least two signals of the first set of signals with the correlation (its representing value as the case may be) determined between the at least two signals of the second set of signals.

In particular, the correlations (values) are averaged, summed or a statistical sample correlation matrix (in short "sample correlation matrix") is generated from the correlations (values), for example a sample correlation matrix as described below.

The number of correlations that is combined can consider the demands for reproducing the information to be transmitted in a reliable manner, said correlations that are combined being related to each other by being generated from signals of different set of signals but having the same identifiers.

For example, the identifiers can be the communication channels via which the signal of a set of signals is received. If, for example, the channels are identified as channel A, channel B, channel C, channel D etc., a signal received via channel A has the identifier A, a signal received via channel B has the identifier B etc. In this case, the identifier AB can be related to the correlation between signal A and signal B, the identifier AC can be related to the correlation between signal A and C etc. The values that are combined are than the values generated during correlation AB in different sets of the multitude of sets of signals, the values generated during correlation AC in different sets of the multitude of sets of signals etc.

Again, there is no need that the number of correlated signals is restricted to two.

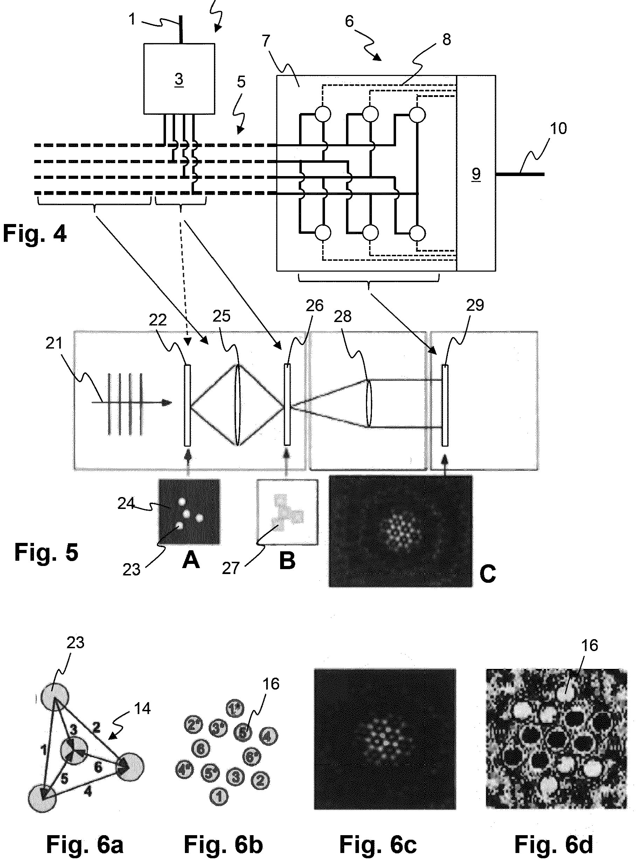

The steps of sampling and combining can be carried out in a single step. This is exemplarily shown in the embodiment according to figures 4-6.

It becomes evident from the description of the method for encoding information why a method for transmitting information that bases on the method for encoding information provides improved transmission capacity:

For example in the embodiment of the method for encoding information that comprises the step of determining a data matrix, a *(n,n)*-data matrix is capable to represent a data string of $n(n-1)/2$ elements in its off-diagonal elements (the divisor is a consequence that a matrix that is a valid correlation matrix is symmetric). However, there are only $n$ carrier signals (communication channels) needed to transmit all information needed to reproduce the data matrix and the data string after transmission. Hence, a method for transmitting information that bases on the method for encoding information according to the invention scales superlinearly with the number of carrier signals (communication channels) needed.

Consequently, a second aspect of the invention concerns a method for transmitting information and a related system configured to carry out said method.

A method for transmitting information comprises the steps of:

- Encoding the information to be transmitted by the method for encoding information in any embodiment and comprising the step of generating a plurality of output signals, in particular the step of generating the multitude of sets of output signals.

For example, the step of encoding the information to be transmitted can comprise the steps of:

  ◦ Determining a data matrix from information to be transmitted.
  In particular, the data matrix can be a *(n,n)*-matrix, wherein *n* is the number of communication channels provided. The generation of the data matrix can be performed in any embodiment of the related step according to the first aspect of the invention.

  In particular, the data matrix can be a valid correlation matrix. This means that the data matrix has the properties of a correlation matrix. In particular, the data matrix is positive semidefinite, Hermitian and has ones along the main diagonal and off-diagonal elements of magnitude (absolute value) less than or equal to 1.

  Preferably, the information to be transmitted is distributed into off-diagonal elements of the data matrix as described with respect to the first aspect of the invention.

○ Generating a multitude of sets of output signals. The multitude of sets of output signals can be generated according to any embodiment of the related step of the first aspect of the invention.

In particular, the vector of random variables can be created and can be of size $n$, wherein $n$ is the number of communication channels provided.

In an embodiment, the output signals generated can be signals that can be transmitted by the transmission links provided. In particular, the output signals generated can be modulated carrier signals.

In another embodiment, the output signals generated can comprise information from which a modulation of at least one carrier signal can be derived. In this embodiment, the method can comprise the step of providing at least one carrier signal and modulating the at least one carrier signal with the output signals or with a signal derived from the output signal.

For example, it is the phase and/or amplitude of the at least one carrier signal that is modulated with the output signals.

In embodiments, a multitude of carrier signals is provided, wherein the carrier signals have a specific correlation to each other, this means a specific relative correlation.

In such embodiments, the modulation of the carrier signals changes their specific relative correlation.

In particular, the carrier signals are perfectly correlated random variables (correlation coefficient equal to 1) or they are perfectly uncorrelated random variables (correlation coefficient equal to 0).

Carrier signals that are perfectly correlated random variables and carrier signals that are perfectly uncorrelated random variables are favorable because they are easier to produced, for example from laser light and from a thermal light source, respectively.

- • Transmitting a plurality of signals, wherein the signals transmitted are the output signals or signals modulated directly or indirectly by the output signals. "Modulated indirectly" means that the signal is modulated by a signal derived from the output signal.

In many embodiments, the signals modulated by the output signals are carrier signals.

The communication channels used for transmitting the plurality of signals can comprise equivalent communication channels as described below.

In an embodiment, the method comprises a step of transmitting a multitude of sets of signals, wherein the signals transmitted are the sets of output signals or sets of signals modulated directly or indirectly by the output signals.

In other words, the method can comprise a step of transmitting the multitude of sets of output signals or transmitting a multitude of sets of signals modulated by the output signals in a direct or indirect manner.

In an embodiment, the signals modulated by the output signals are modulated in a manner that each set of signals modulated by the output signals corresponds to exactly one set of output signals and that each set of output signals corresponds to exactly one set of signals modulated by the output signals.

Exemplary embodiments of the physical realization of the step of transmitting a multitude of sets of signals is given below, in relation to the optional step of providing a multitude of communication channels.

In an embodiment, the random variables are created in a sequence and the signals are transmitted in a manner that it is known or reproducible which transmitted signal comprises the characteristic value that is related to a random variable at a specific position in the sequence of random variables.

The sequence can be a temporal and/or a spatial sequence.

For example in embodiments comprising the creation of a vector of random variables, the sets of signals can be transmitted in a manner that it is known or reproducible which transmitted signal of a set of signals comprises the characteristic value that is related to a random variable (this means to an entry) at a specific position in the vector of random variables.

In particular, there can be a one-to-one relation between a specific position in the vector of random variables and the identifier.

For example, the signals of a set of signals are distributed to the communication channels according to a distribution formula that depends on the position of the random variable being encoded in a signal of the set of signals. Said position is a positon in the vector of random variables.

For example, the communication channels used for transmitting a set of signals are enumerated and the positions of entries in the vector of random variables are enumerated.

A one-to-one relation between communication channel numbers and the positon numbers can be established.

In particular, the embodiment can comprise the step of transmitting the multitude of sets of signals or the step of generating a multitude of sets of output signals, wherein the steps can comprise the substep of modulating a carrier signal by a signal that is related by a bijective function to an entry in the vector of random variables, wherein the carrier signal modulated and the position of the entry used are given by the one-to-one relation.

For example, the position numbers can be the numbers 1, ..., $n$ as usually used in relation to vectors, this means the number 1 is attributed to the first position, the number 2 is attributed to the second position etc. In this case, the communication channels can be numbered from 1 to $n$ as well and the one-to-one relation is given by attributing a given position number to the equal communication channel number and vice versa.

The communication channels used for transmitting a set of signals can be the communication channels of a set of equivalent communication channels as described below.

In embodiments comprising further the data matrix, there can be a one-to-one relation between positions in the data matrix and positions in the vector of random variables, too.

In other words, there can be a one-to-one relation between the positions of entries in the data matrix and sets of two positions of entries in the vector of random variables.

In particular, the one-to-one relation can be such that a given set of two positions in the vector of random variables is attributed to the position in the data matrix that comprises as entry the correlation coefficient of the entries of the given set of two positions and vice versa.

If the above-mentioned usual numbering of positions in a vector is used, the usual numbering of positions in a matrix using two indexes (one index for row and one for column) can be used to establish a one-to-one relation between the data matrix and the vector of random variables.

- Decoding the information to be transmitted.

The step of decoding can correspond to any embodiment of the isolated decoding step disclosed above.

In particular, the step of decoding the information to be transmitted can comprise the substeps of receiving a plurality of signals, of sampling the signals wherein a correlation between at least two signals and for a multitude of the plurality of signals is determined, for example measured, and of combining at least two of the determined correlations. Said substeps can be realized in any embodiment described.

In an embodiment, the step of decoding the information to be transmitted comprises the substeps of:

   ○ Sampling the transmitted multitude of sets of signals, wherein within a set of signals a correlation is determined between at least two signals.

   ○ Approximating the data matrix from the determined correlations. The substep of approximating the data matrix can be divided into:

      ▪ Detecting a value representing the correlation. In particular, said value can be the value generated during setting the at least two signals in relation as discussed above; and

      ▪ Combining the determined correlations (values) as discussed above, wherein correlations (values) are combined that are determined (generated) during sampling of signals having the same identifiers but are received in different sets of signals.

The steps of sampling and approximating can be carried out in a single step.

In particular, the data matrix is approximated in a manner that the information to be transmitted can be reproduced. For example, a sample correlation matrix is generated for approximating the information to be transmitted. The sample correlation matrix can converge to the correlation matrix or - as the case may be - the data matrix for a number of sampled signals or a number of sampled sets of signals that goes to infinity. Again, the term "sample correlation matrix" is used for the underlying conceptual construct and not in the sense that a specific arrangement of values is generated.

The sample correlation matrix can be generated from the sampled realizations of the vector of random variables or from sampled correlations.

In an embodiment, the sample correlation matrix is represented by

$$k_{ij,N} := \frac{\langle Y_i Y_j^* \rangle_N}{\sqrt{\langle Y_i^* Y_i \rangle_N \langle Y_j^* Y_j \rangle_N}}.$$

$Y$ is a vector of random and $N$ is the number of realizations that have been sampled. The angle brackets with subscript $N$ represent the average over the $N$ sampled realizations and * represents the complex conjugate.

However, it is important to note that in embodiments it is not the realizations of the vector of random variables $Y$

that are reproduced in the step of decoding but the entries in the sample correlation matrix, $k_{ij,N}$.

For example, the data matrix is approximated by reproducing a characteristic value of the entries of the data matrix, only. This characteristic value can be a sign or a phase, for example.

In an embodiment at least two, in particular all, signals of a transmitted set of signals are sampled at the same time.

In embodiments in which a sample correlation matrix is generated, the steps of generating a multitude of sets of output signals, of transmitting a multitude of sets of signals and sampling the transmitted multitude of signals are such that the data matrix is approximated by the sample correlation matrix in a manner sufficient to reproduce the data stored in data matrix.

In an embodiment, the method comprises the step of extracting the information to be transmitted from the sample correlation matrix.

In an embodiment, the method for transmitting information comprises the further step of providing a plurality of communication channels.

The communication channels can be provided by a transmission link, such as a wire, a fiber or a wireless frequency band, for example.

In particular, the plurality of communication channels can be provided by a plurality of transmission links, such as a multitude of wires, a multitude of fibers or a multitude of wireless frequency bands.

The plurality of communication channels can comprise a set of equivalent communication channels. Each communication channel of the set of equivalent communication channels can be supported by a different transmission link.

In other words, a plurality of transmission links used in the method, in particular each transmission link used in the method, can support a communication channel (a carrier signal, a mode) that is equivalent to a communication channel of any other transmission link of the plurality of transmission links.

For example, the communication channels can be equivalent by being modes of the transmission links that share the same frequency band, center wavelength and/or intensity distribution.

In an embodiment, the set of equivalent communication channels is used to transmit the signals of a set of signals as described below.

In embodiments, the number of communication channels in a set of equivalent communication channels can equal the number of signals in a set of signals.

The set of equivalent communication channels can be used to transmit the multitude of sets of signals, wherein the signals of a set of signals are transmitted at the same time and the sets of signals are transmitted one after another.

However, one can also envisage to use a plurality, this means more than one, of sets of equivalent communication channels to transmit the multitude of sets of signals, wherein it is advantageous to transmit the signals of a set of signals with a set of equivalent communication channels and not with communication channels that are not equivalent relative to each other.

In any embodiment, the transmission link or the transmission links provided can be capable to provide a multitude of communication channels (carrier signals, modes). The transmission link(s) provided can be multimode transmission link(s).

In an embodiment in which the communication channels are provided by a multitude of transmission links and in which the transmission links are capable to provide a multitude of communication channels (carrier signals, modes), different communication channels of the multitude of communication channels can be used to transmit different signals.

For example, a first set of equivalent communication channels can be used to transmit the signals of a first set of signals and a second set of equivalent communication channels can be used to transmit the signals of a second set of signals.

For example, the communication channels can be provided by a multitude of multimode fibers. Each of the multimode fibers supports a first mode (a first communication channel) and a second mode (a second communication channel), wherein the first modes of the fibers are identical to each other, in particular identical in terms of wavelength, field distribution etc., and wherein the second modes of the fibers are identical to each other, in particular identical in terms of wavelength, field distribution etc. In this case, the first set of signals can be transmitted by use of the first modes of the fibers and the second set of signals can be transmitted by use of the second modes of the fibers.

In an embodiment, the method for transmitting information can comprise the further step of undo (reverse/nullify) an offset applied in the step of providing at least one offset and of applying the offset to an output signal of a set of output signals.

The invention concerns further a device for encoding information, wherein the device is equipped for carrying out the method for encoding information according to any embodiment of said method.

In particular, the device is equipped to provide information to be transmitted, to create a plurality of random variables, wherein the random variables have correlation coefficients that represent the information to be transmitted, and to generate a plurality of output signals. Each output signal comprises a characteristic value and the characteristic values of the output signals are related by a bijective function to the random variables.

The device can comprise a processor or a physical device configured to at least one of: Provide information to be transmitted, create the plurality of random variables, and generate the plurality of output signals.

In an embodiment, the device for encoding information comprises a processor configured to generate the data matrix from information to be transmitted and to generate a vector of random variables, wherein the vector of random variables has a correlation matrix that is related to or corresponds to the data matrix.

The device can further be equipped to generate the multitude of sets of output signals, wherein each output signal of a set of output signals comprises a characteristic value that is related by a bijective function to an entry in a realization of the vector of random variables.

Dependent on the output signals and independent of the embodiment of the device, the device can comprise a signal generator or a/the processor can be configured to generate the output signals. The former can be the case if the output signals are the signals to be transmitted, the latter can be the case if the output signals are control signals for modulation of carrier signals, for example.

The device can further be equipped to offset the output signals.

The invention concerns further a device for decoding information, wherein the device is equipped for carrying out the method for decoding information according to any embodiment of said method. In particular, the device is configured to decode information encoded by a method for encoding information according to any embodiment of said method.

In particular, the device comprises a correlator equipped to receive a plurality of signals and to determined, in particular measure, a correlation between at least two signals received and for a multitude of signals received. Further, the device is equipped to combine at least two of the determined correlations.

In an embodiment, the device comprises a correlator and a decoder processor. The correlator is equipped to receive the multitude of sets of signals, to attribute an identifier to each signal of a set of signals, and to determine a correlation between at least two signals of the set of signals.

In an embodiment, the correlator is equipped to determine a correlation between each signal of a set of signals and at least another signal of the same set of signals (this means setwise correlation).

The decoder processor can be configured to approximating the data matrix from the correlations.

In an embodiment, the correlator is equipped for detecting a value representing the correlation, in particular the degree of correlation, for each at least two signals set in relation and the decoder processor is configured to combine the values detected for signals having the same identifiers but belong to different sets of signals.

For example, the value is generated during pairwise sampling and is representative for the correlation between pairwise sampled signals.

For example, the decoder processor is configured to generate a sample correlation matrix from the correlated signals.

Independent of the embodiment, the device can be equipped to undo (reversed/nullified) an offset applied during encoding.

The invention concerns further a system for transmitting information, wherein the system is equipped for carrying out the method for transmitting information according to any embodiment of said method. In particular, the system is configured to encode information by the method for encoding according to any embodiment of said method and to decode information by the method for decoding according to any embodiment of said method.

In particular, the system comprises a device for encoding information according to any embodiment of said device and a device for decoding information according to any embodiment of said device.

Exemplary embodiments of the invention are shown in the following figures. In the figures, the same reference symbol is used for identical or comparable elements. It shows:

**Figure 1**    A schematic of an exemplary embodiment of a system for transmitting information;

**Figure 2**    An exemplary realization of transmission links supporting communication channels (carrier signals);

**Figure 3**    An exemplary realization of a correlator;

**Figure 4**    A schematic of another exemplary embodiment of a system for transmitting information;

**Figure 5**    A schematic of an exemplary realization of the embodiment according to Figure 4;

**Figure 6a-6b**    Details on the realization of the embodiment according to figure 5;

**Figure 7**    The exemplary embodiment of the system according to figure 1 being equipped for improved security in terms of eavesdropping; and

**Figure 8**         A flow chart of an embodiment of a method for transmitting information.

The figures show the illustrative exemplary embodiment of pairwise correlations that can be presented in a clear manner. However and as pointed out above, the invention can be carried out without deviating from the inventive idea using the correlation between a multitude of random variables.

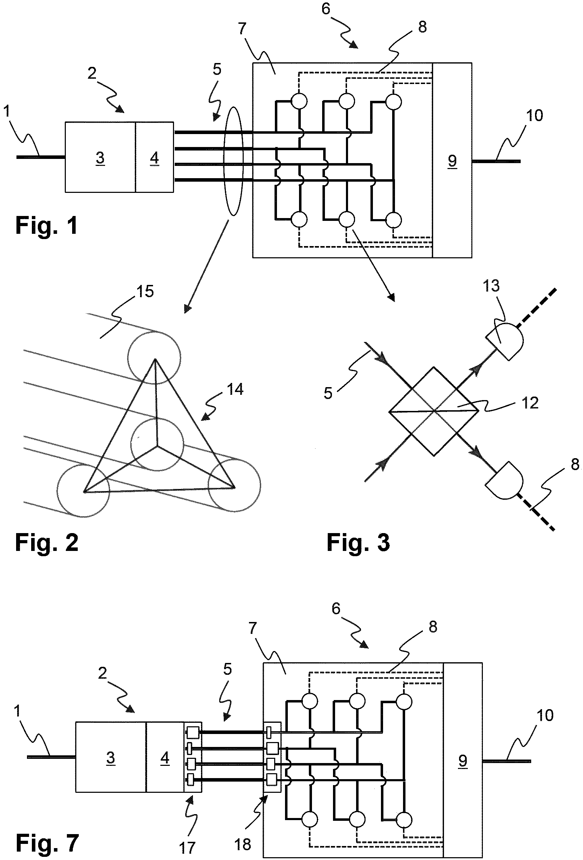

**Figure 1** shows a schematic of an exemplary embodiment of a system for transmitting information, this means a system equipped and configured to carry out the method M1 for encoding information, the method M3 for decoding information, and to transmit signals. The system comprises:

- An input data channel 1. The input data channel 1 is the data channel transmitting the information to be transmitted to an encoder 2.

- A multitude of communication channels 5. The communication channels 5 are the channels each capable to transmit a modulated carrier signal.

- An encoder 2 comprising a processor 3 and a signal generator 4. The encoder 2 comprises an input for the input data channel 1 and an output for the multitude of communication channels 5.
  The processor 3 is configured to generate a data matrix, to perform a statistical coloring transformation and to send a control signal to the signal generator 4.
  The signal generator 4 is configured to produce a multitude of signals each being capable to propagate along a different communication channel 5.
  An exemplary embodiment of the generation of the data matrix, the statistical coloring transformation and the transmission of the signals produced by the signal generator 4 are described in detail below for the exemplary realization of the communication channels 5 and the decoder 6 shown in figures 2 and 3.

- An output data channel 10. The output data channel 10 is the data channel transmitting the transmitted information to an end user, for example.

- A decoder 6 comprising a correlator 7 and a decoder processor 9.
  The correlator 7 is equipped to reference the signal of a communication channel 5 with the signal of another communication channel 5. In other words, the correlator 7 is configured to set the signal of a first communication channel 5 in relation to the signal of another communication channel 5 and to generate at least one value being characteristic for the relative difference between the signal transmitted by the first communication channel and the signal transmitted by the second communication channel.
  The decoder 6 comprises further decoder channels 8 arranged to forward the value being characteristic for the relative difference to the decoder processor 9.
  The decoder processor 9 is configured to approximate the entries in the data matrix, to reproduce the information to be transmitted and to couple the reproduced information into the output data channel 10.
  An exemplary embodiment of the element being capable to reference a communication channel 5 with another communication channel 5 is given in figure 3, said element being an element of the correlator 7. An exemplary embodiment of the approximation of the entries in the data matrix and the reproduction of the information to be transmitted are described in detail below for the exemplary realization of the communication channels 5 and the decoder 6 shown in figures 2 and 3.

In **figure 2** the multitude of communication channels 5 is provided by transmission links 15 being optical fibers.

In the following, we discuss a concrete realization of the aspects of the invention on the example of four single-mode optical fibers 15. The number of fibers and its characteristics are chosen to keep the detailed description of the concrete realization simple. It goes without saying that the aspects of the invention are applicable for other transmission links 15, for other communication channels 5 (and hence for other carrier signals), for another number of communication channels 5 and/or for another realization of the decoder 6, for example.

As pointed out in the general description of the invention, $n = 4$ communication channels 5 (carrier signals) yield $n(n-1)/2 = 6$ transmission channels 14 if an encoding method according to the invention is used.

Let's assume that binary information [1, 1, 0, 1, 0, 1] is to be transmitted by transmitting the fields $E_1(t)$, $E_2(t)$, $E_3(t)$ and $E_4(t)$ through the four communication channels 5.

In a first step S1.1 of encoding, a data matrix **K** representing the information to be transmitted, i.e. [1, 1, 0, 1, 0, 1] in the present case, is determined:

The statistical correlation between the fields is

$$K_{i,j} = \frac{\langle E_i(t)E_j^*(t) \rangle}{\sqrt{\langle E_i(t)E_i^*(t) \rangle \langle E_j(t)E_j^*(t) \rangle}},$$

where $\langle .. \rangle$ denotes the mean average. The binary information can be encoded as

$$[1,1,0,1,0,1] \equiv [K_{1,2}, K_{1,3}, K_{1,4}, K_{2,3}, K_{2,4}, K_{3,4}]$$
$$= [\frac{1}{n-1}, \frac{1}{n-1}, \frac{-1}{n-1}, \frac{1}{n-1}, \frac{-1}{n-1}, \frac{1}{n-1}],$$

where, for example, *1/(n-1) = 1/3* can be set in the present example because *1/(n-1)* is the maximum allowable value that ensures a positive semi-definite correlation matrix for all *n(n-1)/2* element binary information sets (combinations of 1s and 0s).

The corresponding data matrix *K* can be defined as

$$\mathbf{K} = \begin{pmatrix} 1 & 1/3 & 1/3 & -1/3 \\ 1/3 & 1 & 1/3 & -1/3 \\ 1/3 & 1/3 & 1 & 1/3 \\ -1/3 & -1/3 & 1/3 & 1 \end{pmatrix}.$$

In a second step S1.2 of the method M1 for encoding, a vector of random variables is generated in order to ensure that a plurality *n* of output signals of the method M1 for encoding possess a desired correlation. The plurality *n* of output signals is synthesized in a third step S1.3 of the method M1 for encoding.

The step S1.2 of determining a vector of random variables and the step S1.3 of generating a plurality of output signals are repeated N times in order to generate a multitude N of sets of output signals.

In other words, N realizations of the vector of random variables are determined and N corresponding sets of output signals are generated.

The desired correlation is given if the correlation matrix of the N realizations of the vector of random variables converges to the data matrix *K* with N→∞.

The step S1.2 of determining the vector of random variables can be realized by performing a so-called statistical coloring transformation as follows, for example:

A singular value decomposition of the data matrix *K* is generated. This means that the diagonal matrix *D* and the eigenvectors *V* that satisfy

$$\mathbf{K} = \mathbf{V}\mathbf{D}\mathbf{V}^\dagger = \left[\mathbf{V}\sqrt{\mathbf{D}}\right]\left[\sqrt{\mathbf{D}}\mathbf{V}^\dagger\right]$$

are found.

Defining

$$\mathbf{M} \equiv \left[\sqrt{\mathbf{D}}\mathbf{V}^\dagger\right]$$

and using a random vector $\mathbf{R} = [R_1, R_2, R_3, R_4]$ whose elements $R_i$ have zero mean and are uncorrelated, the vector of random variables can be generated

$$\mathbf{E} = \begin{pmatrix} E_1 \\ E_2 \\ E_3 \\ E_4 \end{pmatrix} = \mathbf{R}\,\mathbf{M}\;.$$

In particular, the random vector $\boldsymbol{R}$ is a length-$n$ row vector of zero-mean, identically distributed, uncorrelated, complex random variables. For instance, the entries of the random vector $\boldsymbol{R}$ could be pulled individually from a uniform (-0.5, 0.5) distribution, or a normal distribution with mean zero and standard deviation 1, or uniformly from the unit circle of complex plane.

In the exemplary embodiment according to figures 1-3, the fields $E_1(t)$ .. $E_4(t)$ that are generated by the signal generator 4 and transmitted in the fibers 15 constitute the entries of a realizations of the vector of random variables. In other words and taking into account that the step S1.2 of determining a vector of random variables and the step S1.3 of generating a plurality of output signals are repeated N times, the output signals of the method M1 for encoding are transmitted in sets and each set forms a realization of the vector of random variables.

However, there are embodiments of the method M1 for encoding in which the output signals that can be seen as physical realizations of a realization of the vector of random variables are control signals but not the signals transmitted in a step S2 of transmitting subsequent to the step 1.3 of generating a plurality of output signals. The embodiment shown in figures 4-6 comprises an example of such a realization of the method M1 for encoding.

In the exemplary embodiment described in figures 1-3, it is the amplitude that is modulated to generate the output signals $E_1(t)$ .. $E_4(t)$. However, one can envisage to modulate phase instead of amplitude or to modulate both amplitude and phase.

The output signals, this means the fields $E_1(t)$ .. $E_4(t)$ in the given case, (or a carrier signal modulated by the output signals in the embodiment of figures 4-6) are sent through the $n$ =4 communication channels 5, this means the four fibers 15 in the given case.

The step S1.3 of generating a plurality of output signals and the step S2 of transmitting the generated output signals (or the carrier signals modulated by the output signals) is repeated $N$ times.

On the receiving end of transmission of the signals, $E_1(t)$ .. $E_4(t)$ in the given case, are sampled at discrete times (as described in detail below, figure 3). By using $N$ samples an N-sample correlation matrix $\boldsymbol{K}_N$ can be generated. $\boldsymbol{K}_N = \boldsymbol{K}$ results in the limit $N{\to}\infty$. However - as shown in the embodiment according to figures 4-6 - there are embodiments in which there is no need to generate the N-sample correlation matrix $\boldsymbol{K}_N$.

There is no need that the output signals, the fields $E_1(t)$ .. $E_4(t)$ in the given case, are discrete realizations. They can also be continuous functions. The N-sample correlation matrix $\boldsymbol{K}_N$ then is a finite-time correlation matrix. The longer the averaging time $\varDelta t$ the higher the accuracy will be. In the limit $\varDelta t{\to}\infty$ the finite-time correlation matrix $\boldsymbol{K}_N$ converges to K.

On the receiving end the N-sample correlation matrix $\boldsymbol{K}_N$ is formed as exemplarily described in the following from which the information $[K_{1,2},\ K_{1,3},\ K_{1,4},\ K_{2,3},\ K_{2,4},\ K_{3,4}]$ = [1,1,0,1,0,1] is retrieved.

**Figure 3** shows an exemplary embodiment of a correlator 7 that is equipped to carry out a step S3.1 of sampling the transmitted signals pair- and set-wise. The step S3.1 of sampling the transmitted signals pair- and set-wise is a step of the method M3 for decoding the information.

Said step S3.1 generates values indicating the correlation between pairwise sampled signals. These values are transmitted to the decoder processor 9 by the use of decoder channels 8. The decoder processor 9 is configured to reproduce the information encoded and transmitted as described in relation to figures 1 and 2 from the transmitted values. This means, the processor 9 is configured to carry out a step S3.2 of approximating the data matrix from the transmitted values, this means from the pairwise sampled signals.

In particular, the step S3.2 of approximating the data matrix can comprise a substep of combining the values generated from the pairwise sampling of signals that are received through the same communication channels 5 but in different sets of signals.

The step S3.2 of approximating the data matrix can further comprise (as it is the case if a correlator 7 as shown in figure 3 is used) combining values that are generated during pairwise sampling of two transmitted signal pairs.

In the exemplary embodiment shown in figure 3, the values and hence the information is retrieved from interference measurements between the fields $E_i(t)$ and $E_j(t)$, $i,j$ = 1, 2, 3, 4, $i{\neq}j$. The value of the correlation follows from the visibility of interference fringes.

Therefore, the exemplary correlator 7 is equipped to perform $n(n-1)/2$ = 6 interference measurements. The decoder processor 9 is configured to approximate (reproduce in the hypothetical case of $N{\to}\infty$ or $\varDelta t{\to}\infty$) the data matrix $\boldsymbol{K}$ from an outcome of the interference measurements.

In other words, the correlator 7 is equipped to split each signal received, this means $E_1(t)$ .. $E_4(t)$ in the given case, into $(n-1)$ = 3 subsignals (subfields). The correlator 7 comprises further at least one splitter 12 and at least one pair of detectors 13. The concrete realization of the splitter depends on the received signals. For example, it is a beam splitter in the shown case of optical signals and a signal splitter in the case of Microwave or RF signals.

In the following, it is assumed that each communication channel 5 carries the same power $P_o$.

An interference measurement is done by combining the two input fields $E_i(t)$ and $E_j(t)$ with the splitter 12 and directing the combined signal to the two detectors 13 of the pair of detectors. The interference measurements performed differ from each other by the input fields that are combined.

The optical system (in particular the path length) is adjusted such that a first detector of the pair of detectors 13 renders a maximum value (constructive interference) and a second (the other) detector of the pair of detectors 13 renders a minimum value (destructive interference). Thus, the interference measurement of fields $E_i(t)$ and $E_j(t)$ renders the two detector signals

$$P_{i,j}^{(1)} = \frac{P_0}{(n-1)}\left[1 + |K_{i,j}|\right], \qquad P_{i,j}^{(2)} = \frac{P_0}{(n-1)}\left[1 - |K_{i,j}|\right]$$

wherein the superscript (1) indicates the signal detected by the first detector and the superscript (2) indicates the signal detected by the second detector.

Hence, the values generated in the step S3.1 of sampling the transmitted signals pair- and set-wise are intensities in the given case.

The two detector signals are transmitted to the decoder processor 9.

The correlation $K_{i,j}$ between fields $E_i(t)$ and $E_j(t)$ can be retrieved from the difference

$$\Delta P_{i,j} = P_{i,j}^{(1)} - P_{i,j}^{(2)}$$

The entry $(K_N)_{i,j}$ of the N-sample correlation matrix $K_N$ can be formed from N interference measurements of N different realizations of $E_i(t)$ and $E_j(t)$.

In other words, the step S3.2 of approximating the data matrix comprises forming the difference of the two intensity values generated in a single pair- and set-wise sampling and averaging related differences over the N interference measurements, in the embodiment shown.

Finally, the decoder processor 9 is configured to reproduce the information, [1, 1, 0, 1, 0, 1] in the given case, after forming the N-sample correlation matrix $K_N$.

**Figures 4 and 5** show schematics of another exemplarily embodiment of a system for transmitting information equipped to carry out the method M1 for encoding information, the method M3 for decoding information and to transmit signals.

The differences to the system shown in figures 1-3 are:

- There is no signal generator 4 in the sense of the embodiment according to figures 1-3, this means there is no signal generator 4 configured to produce a plurality of signals each being capable to propagate along a different communication channel 5.
  In other words, there is no plurality of output signals produced by the encoder 2 each being capable to propagate along a different communication channel 5, but the encoder 2 produces a plurality of output signals with which a plurality of carrier signals can be modulated in a manner that the modulated carrier signals possess the desired correlation in the sense discussed above.
- There is a wireless free communication between the encoder 2 and the decoder 6. This means, there are no physical transmission links but the communication channels 5 are given by freely propagating carrier signals.
  The wireless free communication is indicated by dotted lines in figure 4.
- No N-sample correlation matrix $K_N$ is generated but the data matrix $K$ and the decoding are such that the information to be transmitted can be reproduced from reproducing a characteristic of the entries of the data matrix $K$.

One can envisage embodiments of the system according to figure 1 in which at least one of the differences listed above is implemented, only.

**Figure 5** shows a schematic of an exemplary, concrete realization of the system for transmitting information according to figure 4. Again, one can envisage other realizations including at least one of using radio signals, using another manner to generate the carrier signals, using another manner to modulate the carrier signals, using a different step of transmission and/or using a different step of sampling, for example.

In the embodiment of figure 5, the carrier signals 5 (communication channels) are provided by a monochromatic plane wave 21 that is incident on an amplitude spatial light modulator (amplitude SLM) 22.

Inset A of figure 5 shows a picture of the amplitude SLM 22 used in the exemplary embodiment. It comprises four regions 23 transparent for the monochromatic plane wave 21 arranged on an otherwise non-transparent plate 24.

The transparent regions 23 of the exemplary embodiment are circular apertures. The apertures are arranged in a non-redundant array such that the correlations between the signals (fields) in each aperture can be deduced from the resulting diffraction pattern.

The number of transparent regions 23 defines the number of communication channels 5.

The amplitude SLM 22 is imaged on a phase spatial light modulator (phase SLM) 26 by use of an imaging lens 25.

The phase SLM 26 comprises controllable phase modulators 27 at the positions on which the transparent regions 23 of the amplitude SLM 22 are imaged.

Inset B of figure 5 shows a picture of the phase SLM 26 used in the exemplary embodiment.

The information to be transmitted can be encoded into the carrier signals by changing the phase of each carrier signal according to control signals generated by the encoder processor 3. In other words, the output signals generated by the encoder 2 are control signals configured to control the phase modulators 27 in a manner that realizations of the vector of random variables are invoked in the relative phases of sets of the phase-modulated carrier signals.

In addition or alternatively, the amplitude SLM 22 can be controllable.

In the case of a controllable amplitude SLM 22 and a controllable phase SLM 26, the signal that exits each aperture can be arbitrarily attenuated and phase shifted.

The control signals generated by the processor 3 can be configured to control the amplitude SLM 22 and the phase SLM 26 in a manner that realizations of a complex vector of random variables are invoked in the amplitude and the phase of sets of the modulated carrier signals. In particular, the amplitude and phase of each vector element of the complex vector of random variables can be applied to an aperture and its related phase modulator, respectively.

In the concrete embodiment of figures 5 and 6, the amplitude and phase of each vector element is applied to a respective carrier signal, with amplitude normalized to the global maximum amplitude element such that no gain is required. Under this particular scheme, the phase SLM serves as a "sign" SLM, this means it only ever applies a phase of 0 or $\pi$ to the field in a given aperture as a consequence of the real-valued data matrix $K$ and the method by which the random variables are generated (as described above).

In the exemplary embodiment of figure 5, a lens 28 is placed between the phase SLM 26 and a CCC camera 29 in a manner that the optical Fourier transform of the field distribution at a plane of the phase SLM is projected onto the CCD camera 29. Thereby, an interference pattern is created that depends on the correlations between the modulated fields of the circular apertures. Said plane of the phase SLM 26 can be the surface of the phase SLM 26 oriented towards the lens 28.

Inset C of figure 5 shows a picture of a time-averaged interference pattern taken by the CCD camera 29.

The data matrix $K$ can be approximated sufficiently to reproduce the information to be transmitted as follows, for example:
N interference pattern corresponding to N realizations of the vector of random variables are recorded.

The recorded interference pattern are summed together to form a real-valued matrix $M$.

The summation can be done by increasing the averaging time, this means integration time in the case of the CCD-detector 29, as discussed with respect to the embodiment of figures 1-3.

The 2-dimensional inverse discrete Fourier transform $N$ of the real-valued matrix $M$ is calculated. As a consequence of the autocorrelation theorem (cf. J.W. Goodman, Introduction to Fourier Optics, Roberts and Company Publishers, 2005, page 8) the resulting complex-valued image contains $n(n-1)+1$ circular regions 16. $n(n-1)/2$ of the regions correspond to the pairwise correlations of the signals emerging of the $n$ circular apertures and being phase modulated at the phase SLM, another $n(n-1)/2$ regions correspond to the complex conjugate of those correlations, and one region relates to the total light intensity (cf. A.I. Gonzalez and Y. Mejía, "Nonredundant array of apertures to measure the spatial coherence in two dimensions with only one interferogram," J. Opt. Soc. Am. A Opt. Image Sci. Vis. 28, 1107-1113 (2011)).

In other words, the $n(n-1)/2$ circular regions 16 comprise information about the pairwise correlation of the phase- and/or -as the case may be - amplitude modulated signals.

The position of each circular region 16 (except the one that relates to the total intensity) can be attributed to the two circular apertures 23 generating the signals whose pairwise correlation manifests in said circular region. In other words, each circular region 16 (except the one that relates to the total intensity) can be related to two communication channels 5. Hence, each circular region 16 (except the one that relates to the total intensity) can be representative for a transmission channel.

Consequently, information about the correlation coefficients of the transmitted signals and hence of the entries in the data matrix $K$ can be retrieved by analyzing the circular regions 16.

In the case of the embodiment in which the phase SLM serves as a "sign" SLM and the binary approach described with respect to figures 1-3 is implemented, this means the data matrix $K$ is chosen such that the statistical correlation between each pair of transmitted signals is either +c or -c for some scalar c, it is sufficient to recover the complex argument of the correlation and not the full value. This means, it is sufficient to examine $|arg(N)|$, assuming the argument returns values between $-\pi$ and $\pi$, and to find that each circle takes one of two possible values, which correspond to + or - and thereby to 1 or 0.

**Figures 6a-6d** show a schematic of the relative arrangement of the apertures 23 as used in figure 5, inlet A (**figure 6a**), the allocation of the transmission channels 14 to circular region 16 derived from the arrangement of apertures 23 on the plate 24 (**figure 6b**), a picture of a time-averaged interference pattern taken by the CCD camera 29 (**figure 6c**), and the Fourier-transform complex argument magnitudes, this means $|arg(N)|$ (**figure 6d**).

As can be seen from figures 6a and 6d, the apertures 23 are arranged on the plate 24 in a manner that the circular regions 16 are well separated from each other.

In the case shown in figures 6a-6d, the binary information [0, 0, 0, 1, 1, 1] was transmitted by the method.

In the embodiment of figure 5, the decoder processor 9 is configured to perform the post-processing of the real-valued matrix $M$. In particular it is configured to perform at least one of: calculating the 2-dimensional inverse discrete Fourier transform $N$ of the real-valued matrix $M$; processing further the 2-dimensional inverse discrete Fourier transform $N$, for example determining $|arg(N)|$; identifying the circular regions 16; and attributing the circular regions to communication channels (apertures in the given case), and reproducing the information to be transmitted.

In the exemplary, concrete embodiment given with respect to figures 4-6, the information to be transmitted is encoded in the decorrelation of mutually perfectly correlated signals. The exemplary, concrete embodiment given with respect to figures 1-3 can be considered as an example of an embodiment in which the information to be transmitted is encoded by making mutually uncorrelated signals mutually partially correlated.

In other words, the step of generating a multitude of sets of output signals can comprise the substep of decorrelating mutually perfectly correlated signals or the substep of correlating mutually uncorrelated signals.

**Figure 7** shows an exemplary embodiment of the system for transmitting information that is further equipped for improved security in terms of eavesdropping.

In the exemplary embodiment shown, the system comprises an encoder 2 with a set of phase delay lines 17, wherein the phase delays generated are greater than the temporal coherence length of the carrier signals.

The exemplary system comprises further a decoder 6 comprising a set of conjugate phase delay lines 18. This means, the set of conjugate phase delay lines 18 are configured to undo (reverse/nullify) the phase delays generated by the set of phase delay lines 17.

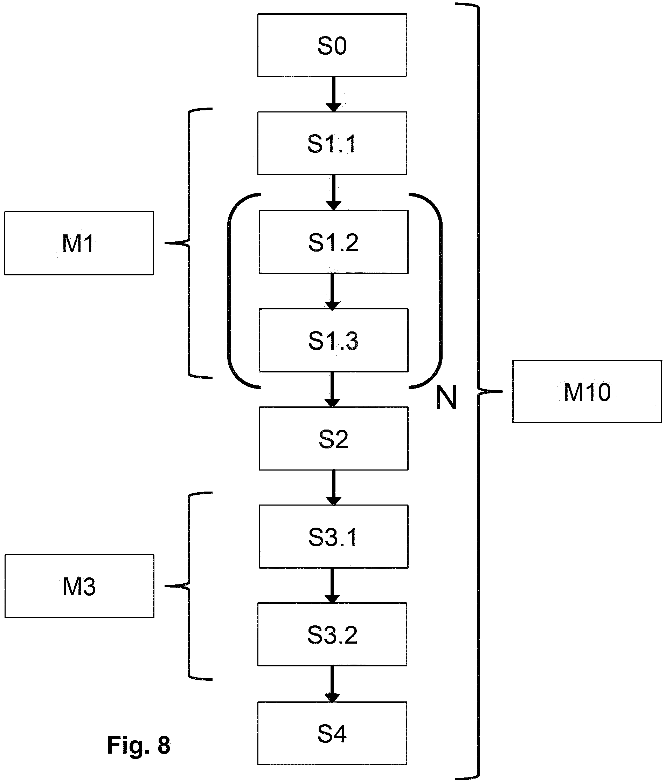

**Figure 8** shows a flow chart of an embodiment of a method M10 for transmitting information. The flow chart shows an embodiment of the method M1 for encoding information and an embodiment of a method M3 for decoding information embedded in the method M10 for transmitting information. However, the methods for encoding and decoding are applicable individually and individually from the method M10 for transmitting.

The systems shown in figures 1, 4, 5 and 7 are equipped for carrying out the method M10 for transmitting information according to figure 8, for example. Parts of the systems as well as the devices shown in figures 1 and 3 are equipped for carrying out the method M1 for encoding, the method M3 for decoding or steps of the method for encoding, the method for decoding or the method for transmitting.

In the exemplary embodiment shown in figure 8, the method M1 for encoding information comprises the step S1.1 of determining a data matrix, the step S1.2 of creating a plurality of random variables, for example by creating a vector of random variables, and the step S1.3 of generating a plurality of output signals.

These steps can be realized in any embodiment disclosed above.

The step S1.2 of creating a plurality of random variables and the step S1.3 of generating a plurality of output signals are repeated several times ("N times") in use, wherein the step 1.2 of creating a plurality of random variables can be seen a step of determining realizations of the vector of random variables, as the case may be.

The method M1 for encoding information can comprise any optional features disclosed with respect to the method M1 for encoding.

In the exemplary embodiment shown in figure 8, the method M3 for decoding information comprises the step 3.1 of sampling received signals, for example received sets of signals pair- and set-wise, and the step 3.2 of approximating the information to be transmitted, for example approximating the data matrix into which the information to be transmitted is transferred and based on which the received sets of signals are generated.

These steps can be realized in any embodiment disclosed above.

The method M3 for decoding information can comprise any optional features disclosed with respect to the method M3 for decoding.

In the exemplary embodiment shown in figure 8, the method M10 for transmitting information comprises the steps of the method M1 for encoding information and the steps of the method M3 for decoding information. Further it comprises a step S0 of receiving information to be transmitted, a step S2 of transmitting a plurality of signals, for example a multitude of sets of signals, and a step S4 of reproducing the information to be transmitted.

These steps can be realized in any embodiment disclosed above.

The step S2 of transmitting a plurality of signals, for example a multitude of sets of signals, can be considered as a step of transmitting a plurality of signals, for example a set of signals, that is repeated several times ("N times"). Accordingly, the step 3.1 of sampling received signals, for example received sets of signals pair- and set-wise, can be considered as a step that is repeated several times ("N times").

The method M10 for transmitting information can comprise any optional feature disclosed with respect to the method M10 for transmitting.

**Claims**

1. A method for encoding information comprising the steps of:

   • Providing (S0) information to be transmitted;
   • Creating (S1.2) a plurality of random variables, wherein the random variables have correlation coefficients that represent the information to be transmitted.

2. The method according to claim 1, comprising a step (S1.3) of generating a plurality of output signals, wherein each output signal comprises a characteristic value, wherein the characteristic values of the output signals are related by a bijective function to the random variables.

3. The method according to claim 1 or 2, comprising a step (S1.1) of determining a data matrix (K) from information to be transmitted, wherein the step (S1.2) of creating the plurality of random variables comprises a substep of creating a vector of random variables, wherein the vector of random variables has a correlation matrix that is related to the data matrix (K).

4. The method according to claim 3, comprising the step (S1.3) of generating a plurality of output signals, wherein the plurality of output signals are generated in a multitude of sets of output signals, wherein each output signal of a set of output signals comprises a characteristic value, wherein the characteristic values of the output signals of a set of output signals are related by the bijective function to the entries of a realization of the vector (Y) of random variables.

5. The method according to claim 3 or 4, wherein the correlation matrix is Hermitian and positive semidefinite and wherein the correlation matrix has ones along the main diagonal and off-diagonal elements of magnitude less than or equal to 1.

6. The method according to one of claims 1-5, comprising the step (S1.3) of generating a plurality of output signals and comprising further a step of providing at least one offset and of applying the offset to an output signal such that the characteristic of the offset output signal has changed with respect to another output signal.

7. The method according to one of claims 1-6, comprising the step (S1.3) of generating a plurality of output signals, wherein a correlation coefficient between at least two output signals is modulated.

8. A method for decoding information comprising the steps of:

   • Receiving a plurality of signals;
   • Sampling (S3.1) the signals, wherein a correlation between at least two signals and for a multitude of the plurality of signals is determined;
   • Combining at least two of the determined correlations.

9. The method according to claim 8, wherein:

   • The plurality of signals is received in a multitude of sets of signals, wherein an identifier is attributed to each signal of a set of signals;
   • The correlation is determined between at least two signals of a first set of signals and between at least two signals of a second set of signals, wherein the at least two signals of the first set of signals have the same identifiers as the at least two signals of the second set of signals;
   • Combining the correlation determined between the at least two signals of the first set of signals with the correlation determined between the at least two signals of the second set of signals.

**10.** A method for transmitting information, comprising the steps of:

   • Encoding the information to be transmitted by a method according to one of claims 1-7 and comprising the step (S1.3) of generating a plurality of output signals;
   • Transmitting (S2) a plurality of signals, wherein the signals transmitted are the output signals or signals modulated by the output signals;
   • Decoding the information to be transmitted by a method according to claim 8 or 9; and
   • Approximating (S3.2) the information to be transmitted from the combined correlations.

**11.** The method according to claim 10, comprising a further step of providing a plurality of communication channels (5), wherein the plurality of communication channels (5) comprises a set of equivalent communication channels.

**12.** The method according to claim 10 or 11, wherein the random variables are created in a sequence and the signals are transmitted in a manner that it is known or reproducible which transmitted signal comprises the characteristic value that is related to a random variable at a specific position in the sequence of random variables.

**13.** A device (2) for encoding information, the device being equipped to:

   • Provide information to be transmitted;
   • Create a plurality of random variables, wherein the random variables have correlation coefficients that represent the information to be transmitted;
   • Generate a plurality of output signals, wherein each output signal comprises a characteristic value, wherein the characteristic values of the output signals are related by a bijective function to the random variables.

**14.** A device (6) for decoding information, the device comprises a correlator (7) equipped to receive a plurality of signals and to determine a correlation between at least two signals received and for a multitude of the signals received, wherein the device is equipped to combine at least two of the determined correlations.

**15.** A system for transmitting information, the system comprises a device for encoding information according to claim 13 and a device for decoding information according to claim 14.

**Fig. 1**

**Fig. 2**

**Fig. 3**

**Fig. 7**

**Fig. 4**

**Fig. 5**

A    B    C

**Fig. 6a**    **Fig. 6b**    **Fig. 6c**    **Fig. 6d**

Fig. 8

Europäisches
Patentamt
European
Patent Office
Office européen
des brevets

## EUROPEAN SEARCH REPORT

Application Number

EP 18 21 3364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2001/048538 A1 (KOWALSKI FRANK VICTOR [US]) 6 December 2001 (2001-12-06) | 1,2,6-15 | INV. H04J14/00 |
| A | * paragraphs [0045], [0046], [0057] * <br> * claim 1 * <br> * claim 24 * <br> * paragraph [0047] * | 3-5 | |
| A | KARAFOLAS N ET AL: "OPTICAL FIBER CODE DIVISION MULTIPLE ACCESS NETWORK: A REVIEW", OPTICAL FIBER TECHNOLOGY, ELSEVIER, AMSTERDAM, NL, vol. 2, 1 April 1996 (1996-04-01), pages 149-168, XP000921026, ISSN: 1068-5200, DOI: 10.1006/OFTE.1996.0017 * Part IV, a Spectral Encoding Using Phase Modulation * | 1-15 | |

TECHNICAL FIELDS SEARCHED (IPC)

H04J

The present search report has been drawn up for all claims

| Place of search | Date of completion of the search | Examiner |
|---|---|---|
| Munich | 19 June 2019 | Borsier, Celine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 21 3364

This annex lists the patent family members relating to the patent documents cited in  the above-mentioned European search report.
The members are as contained in the European Patent Office EDP file on
The European Patent Office is in no way liable for these particulars which are merely given for the purpose of information.

19-06-2019

| Patent document cited in search report | | Publication date | Patent family member(s) | | Publication date |
|---|---|---|---|---|---|
| US 2001048538 | A1 | 06-12-2001 | AU 6133701 A | | 11-12-2001 |
| | | | US 2001048538 A1 | | 06-12-2001 |
| | | | WO 0193522 A1 | | 06-12-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. BROOKS ; R. WENTWORTH ; R YOUNGQUIST ; M. TUR ; B. KIM ; H SHAW.** Coherence multiplexing of fiber-optic interferometric sensors. *J. Lightwave Technol.,* 1985, vol. 3, 062-1072
- **J.P. GOEDGEBUER ; H PORTE ; A. HAMEL.** Electrooptic modulation of multilongitudinal mode laser diodes: Demonstration at 850nm with simultaneous data transmission by coherence multiplexing. *IEEE J. Quantum Electron.,* 1987, vol. 23, 1135-1144
- **R.A. GRIFFIN ; D.D. SAMPSON ; D.A. JACKSON.** Coherence coding for photonic code-division multiple access networks. *J. Lightwave Technol.,* 1995, vol. 13, 1826-1837

- Coherence multiplexing for optical communication systems. **A. MEIJERINK.** Ph.D. thesis. University of Twente, 2005
- **D.G. MANOLAKIS ; R.B. LOCKWOOD ; T.W. COOLEY.** Hyperspectral Imaging Remote Sensing: Physics, Sensors, and Algorithms. Cambridge University Press, 2016, 370-371
- **L. DEVROYE.** Non-Uniform Random Variate Generation. Springer, 1986, 564-566
- **J.W. GOODMAN.** Introduction to Fourier Optics. Roberts and Company Publishers, 2005, 8
- **A.I. GONZALEZ ; Y. MEJÍA.** Nonredundant array of apertures to measure the spatial coherence in two dimensions with only one interferogram. *J. Opt. Soc. Am. A Opt. Image Sci. Vis.,* 2011, vol. 28, 1107-1113